# EUROPEAN PATENT APPLICATION

(11) **EP 4 730 017 A1**
(43) Date of publication of application: **22.04.2026**
(21) Application number: 25203474.9
(22) Date of filing: 19.09.2025
(51) Int. Cl.: G02B 27/01, G02B 30/00, H04N 13/30

(54) **A DEVICE FOR VISUALIZING TRIDIMENSIONAL IMAGES WITH HOLOGRAPHIC EFFECT, CORRESPONDING VEHICLE AND METHOD**

(30) Priority: 15.10.2024 IT 202400022884
(71) Applicant: Stellantis Europe S.p.A., 10135 Torino (TO) (IT)
(72) Inventor: VIOTTI, Francesco, I-10135 Torino (IT)
(74) Representative: Buzzi, Notaro & Antonielli d'Oulx S.p.A.

(57) **Abstract**

Display device (20) for visualizing images with holographic effect, the device (20) comprising: a set of support elements (200) comprising a plurality of light sources (LS₁, LS₂, LS₃, LS₄) comprising light sources distributed in formations of linear arrays of light sources (210, 212, 214, 216). The light sources in the plurality of light sources (LS₁, LS₂, LS₃, LS₄) are configured to emit light of a plurality of colors. The linear arrays of light sources (210, 212, 214, 216; 210, 212, 310, 312) in each support element of the set of support elements (200; 300) are spaced from each other by at least a first pitch along a transverse axis (X). The light sources in the plurality of light sources (LS₁, LS₂, LS₃, LS₄) are spaced from each other along a longitudinal axis (Y) with a second pitch (K) smaller than the at least one first pitch (P; Pa, Pb). The device (20; 20') further comprises: a set of actuators (230, 240) coupled (218b) to respective support elements in the set of support elements (200), each actuator in the set of actuators (230, 240) being configured to provide at least one translatory movement along the transverse axis (X) to the respective support element (200), and a control unit (CPU) coupled to the set of actuators (230, 240) and to the set of light sources (LS₁, LS₂, LS₃, LS₄) coupled to the set of support elements (200; 300) to apply the at least one translatory movement and to drive the light sources. The control unit (CPU) is configured to receive a set of signals indicative of digital images evolving over time and to drive the light sources in each set of light sources (LS₁, LS₂, LS₃, LS₄) in each support element (200) to reproduce the digital images evolving over time together with, preferably synchronized with, the application of the translatory movement via the set of actuators (240, 230).

## Description

### Technical field

The description relates to methods and displays for visualizing tridimensional images, for example with holographic effects.

One or more embodiments can be applied to the automotive sector, for example for visualizing information on a head-up screen or other displays in the passenger compartment.

### Background

Head-up display devices can be employed in vehicle passenger compartments to facilitate the visualization of information for the driver: a driver can observe various instrument conditions projected into his field of view while looking forward through the vehicle windshield.

Consequently, these techniques provide driving convenience and help avoid an accident that may occur when a driver turns his eyes downward to view an instrument panel.

There are modes for visualizing tridimensional objects with holographic objects, for example exploiting rotating supports on which LEDs are installed that are driven to display tridimensional images, offering the user the possibility to enjoy a holographic effect. Such modes exploit the phenomenon of visual persistence, which occurs when our brain continues to perceive an image for a short period after the object has disappeared. In practice, if we see a series of images rapidly one after the other, our brain interprets them as continuous movement. This effect is the basis of many visual technologies, such as cartoons, films, and flip-books, where static images are presented in sequence to create the illusion of movement. Visual persistence generally lasts from 200 to 300 milliseconds, thus allowing our visual system to merge the images and perceive them as a single fluid representation, rather than as disjointed individual frames.

Some existing solutions are discussed, for example, in the following documents:
EP 0 424 949 A1 discusses a head-up display system that includes an illumination source situated in a recess in the vehicle instrument panel or on the instrument panel and a combiner/retarder element incorporated into the vehicle windshield, wherein the combiner/retarder element includes a reflection hologram and one or more half-wave retarders;
CN217467966 discusses a holographic fan comprising a display device and a rotation drive device that drives the display device, wherein the display device includes the rigid display device and the telescopic link that supports the rigid display device, and the rigid display device includes the rigid display sub-assembly installed in the telescopic link and the linear movement mechanism that drives the longitudinal translation of the rigid display sub-assembly, and the linear movement mechanism drives the longitudinal movement of the rigid display sub-assembly relative to the telescopic link;
CN209911766 discusses a rotary LED bulb strip holographic display device, which comprises an outer shell, the rear movable mounting of the shell has a rotating device, the outer fixed mounting of the shell has a quantity of four connection arms, the cartridge equal on one side that the shell was held by the connection arm has the connection plate, the outside of the connection plate all is provided with the first lamp strip, the front of the shell is provided with the second lamp strip, the rear of the connection arm all is provided with the apron, the apron all the hinges through the hinge with the connection arm, the inner fixed mounting of the shell has control means, the end of the transmission to be connected with the electricity of the control means is inlaid on the right side of the shell;
CN116255593 discusses a rotating LED light bar holographic display device, which comprises a shell, wherein a drive motor is arranged on the rear surface of the shell, a locking groove is formed in the rear surface of the shell and an output shaft of the drive motor penetrates the locking groove; the locking assembly comprises a plurality of locking rods, a plurality of pairs of first spring rods and a plurality of arc-shaped mounting plates, wherein the walls of the locking grooves are provided with a plurality of mounting grooves in a circumferential form, the plurality of pairs of first spring rods are respectively and fixedly mounted in a plurality of through holes, the upper ends of the first spring rods are respectively and fixedly connected with the plurality of mounting plates, one end of the locking rods are respectively and fixedly connected with the plurality of mounting plates, and an output shaft of the drive motor is provided with a plurality of jacks which are respectively used for the insertion of one end of the locking rods in a circumferential form;
EP 0 286 962 A2 discusses a display system, particularly for motor vehicles, comprising an imaging system that makes illuminated objects visible via a collimator or similar and serves to display information;
EP 3 924 767 B1 refers to a device and a system in the form of a head-up display intended to be used for displaying images projected onto surfaces such as an inner surface of a vehicle windshield, and more particularly to a holographic head-up display device, a light module comprising a light source, together with a spatial light modulator that displays a computer-generated hologram once unmodulated beams are filtered using an optical filtering medium;
US 5,729,366 A discusses a heads-up display device for a vehicle comprising a holographic projection optical system constituted by a transmissive holographic optical element and a holographic combiner constituted by a reflective holographic optical element, capable of reducing the number of constituent elements and, therefore, their total volume; since various information can be displayed on the vehicle windshield, the driver can drive the vehicle safely in a comfortable and convenient state.

Such technologies are poorly suited for integration into a vehicle passenger compartment due to safety issues and dimensions that are difficult to adapt to the limited spaces of the passenger compartment.

### Object and purpose

An object of One or more embodiments is to contribute to improving one or more aspects mentioned previously.

According to One or more embodiments, this object can be achieved via a device having the characteristics presented in the claims that follow.

One or more embodiments can relate to a corresponding method of operation of the device for visualizing tridimensional images.

One or more embodiments can relate to a corresponding display, for example equipped on board a vehicle.

The claims are an integral part of the technical teaching provided here with reference to the forms of embodiment.

One or more embodiments can make holographic technology compatible with the dimensions of the passenger compartment, facilitating the use of interactive screens in the vehicle.

For example, one or more embodiments propose a new implementation solution that facilitates usability, for example by employing a rectangular screen shape.

One or more embodiments present one or more of the following advantages:
the transparency or semi-transparency of the display facilitates the production of sharp tridimensional images with holographic effect; and
ease of integration of visual content within the passenger compartment, comparable to augmented reality or as a replacement for the head-up display.

### Brief description of the various views of the drawings

One or more embodiments will now be described, by way of non-limiting examples, with reference to the accompanying figures, wherein:
figure 1 is an exemplary diagram of a conventional system for visualizing tridimensional images with holographic effects,
figure 2 is an exemplary diagram of a display device according to the present description;
figure 3 is an exemplary diagram of a section of the device exemplified in figure 2 along axis III-III;
figure 4, comprising portions a), b) and c), is an exemplary diagram of principles underlying One or more embodiments;
figure 5 is an exemplary diagram of principles underlying one or more embodiments;
figure 6 is an exemplary diagram of an alternative realization of the device exemplified in figure 2;
figure 7 is an exemplary diagram of principles underlying one or more embodiments exemplified in figure 6; and
figure 8 is an exemplary diagram of a vehicle according to the present description.

Corresponding numbers and symbols in the different figures generally refer to corresponding parts, unless otherwise specified.

The figures are drawn to clearly illustrate the relevant aspects of the various forms of embodiment and are not necessarily drawn to scale.

The edges of the features depicted in the figures do not necessarily indicate the termination of the extent of the feature.

### Detailed description

In the following description, one or more specific details are illustrated, with the purpose of providing an in-depth explanation of examples of forms of embodiment of this description.

The forms of embodiment can be obtained with or without one or more of the specific details, or with other methods, components, materials, etc. In other cases, known nodes, structures, materials or operations are not illustrated or described in detail, so as not to obscure some aspects of the forms of embodiment.

The reference to "one form of embodiment" or "various forms of embodiment" in the context of the present description is intended to indicate that a particular configuration, structure, or feature described in relation to forms of embodiment is comprised in at least one form of embodiment. Consequently, phrases such as (in one form of embodiment) or (in various forms of embodiment), which may be present in one or more points of the present description, do not necessarily refer to the same and single form of embodiment.

Furthermore, particular conformations, structures, or features can be combined in any suitable manner in one or more embodiments.

The references used here are provided purely for convenience and therefore do not define the extent of protection or the scope of protection of the forms of embodiment.

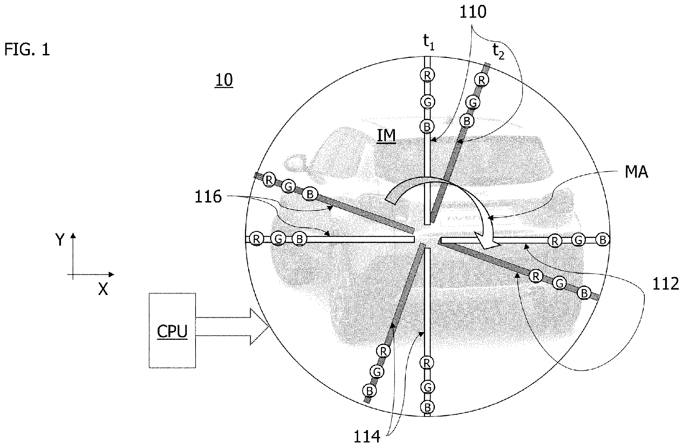

As exemplified in Figure 1, a holographic fan display 10 uses a set of rotating light elements (for example, four) 110, 112, 114, 116 arranged orthogonally to each other to create tridimensional images (for example, the profile of a vehicle V) while these rotating light elements travel a circular trajectory driven by a motor (represented synthetically in figure 1 with an arrow MA indicative of the angular velocity) coupled to them.

As appreciable by a person skilled in the art, the image quality is a function of the rotation speed of the rotating light elements 110, 112, 114, 116 over time (for example, between an initial instant t1 and a subsequent temporal instant t2).

On each rotating light element is mounted a respective set of light sources (for example, LED diodes - Light emitting diodes) R, G, B which can be of different colors (for example, red R, green G and blue B capable of reproducing any color through combination) and whose activation is controlled, together with the rotation MA of the rotating elements 110, 112, 114, 115, by a control unit CPU. For example, while the elements 110, 112, 114, 116 rotate with constant angular velocity, the CPU unit drives the RGB LEDs of the light elements 110, 112, 114, 116 to turn on and off according to a certain temporal sequence, creating a scan that leads to the visualization of a tridimensional image IM. Thanks to the rotation speed and the synchrony of the LEDs, the human eye perceives a stable and tridimensional image from the set of moving light points.

In summary, a "holographic" fan display 10 creates the illusion of tridimensional images through accurate synchrony of light and movement, in a manner per se known for example from document WO 2015/140578 A1.

These fan displays 10 are used in various contexts, such as advertising, presentations and artistic installations, thanks to their ability to attract attention and create a strong visual impact.

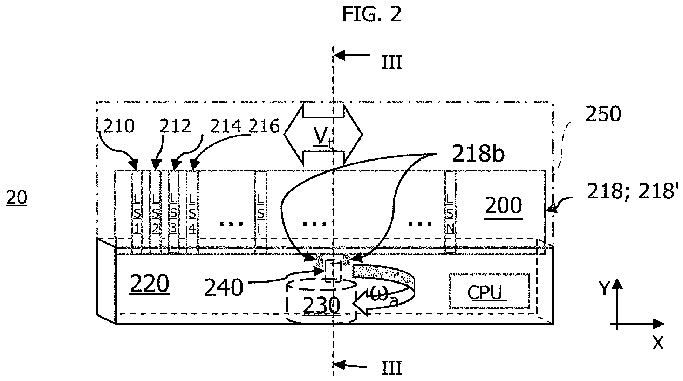

As exemplified in Figure 2, a device 20 as exemplified here comprises:
at least one transparent or semi-transparent support 200, for example a frame 218 comprising an array of support elements 210, 212, 214, 216 arranged according to a grid (for example, parallel to each other at a constant distance P or "comb-like" with the empty space between them such as to allow seeing through) or a transparent resin body 218' (i.e., permeable to the passage of visible light frequencies) in which light elements arranged according to the aforementioned grid are "embedded" (i.e., integrated), as discussed below;
a set of light sources LS₁, LS₂, LS₃, LS₄, ..., LSᵢ, ..., LS_{N} (for example, LED strips comprising diodes of different colors configured to reproduce any color through combination, in a manner per se known) comprising light sources mechanically coupled to the at least one support 200 and arranged to form an array of movable light elements;
a coupling interface (for example, a rectangular grid or a housing for a pin) 218 between the array of supports 210, 212, 214, 216 and at least one actuator 230, for example via a "tooth" recessed in the support body 200 and configured to engage a corresponding pin 240 of an actuator, so as to facilitate the movement of the light elements LS₁, LS₂, LS₃, LS₄;
a container 220 coupled to at least one side of the interface 218 comprising a housing for one or more actuators 230 (for example, comprising a cam mechanism) configured to translate the display structure 200 along at least one side (e.g., major) thereof.

For simplicity, in the following reference will be made mostly to the form of embodiment wherein the at least one transparent or semi-transparent support element 200 comprises the array of support elements 210, 212, 214, 216, it being understood however that the principles discussed in relation to this form of embodiment are applicable, mutatis mutandis, also to the form of embodiment wherein the light elements and their relative wiring are "embedded" in the resin of the transparent support.

For example, the container 220 optionally also comprises at least a partial and transparent cover (or "cover") configured to counteract damage to the support elements 210, 212, 214, 216 and to block an air flow possibly generated by the movement of them and/or of the support 200. This air flow could otherwise be bothersome for the occupants.

As exemplified in Figure 2, the container 220 can therefore facilitate the visualization of tridimensional images with holographic effect even in closed environments such as the passenger compartment of a vehicle.

Unlike the current holographic solution with rotating blades of the prior art, in the solution discussed therein the image is created by the mobile light sources (for example, LED strips LS₁, LS₂, LS₃, LS₄ mounted on perpendicular supports 210, 212, 214, 216) that translate rapidly (for example, according to the same axis in phase or in counterphase, i.e., in alternate opposite directions) creating the image and at the same time letting through what is present in the background (be it because the space between the LED strips is hollow as in the case of the array of supports 210, 212, 214, 216, or because the same space is filled by an optically transparent surface as in the case of the resin 200).

As exemplified in Figure 2, the at least one support 200 can extend over an area available for the visualization of the tridimensional images (indicated for simplicity with the same reference in the figure).

As exemplified in Figure 2, the translation of the at least one transparent or semi-transparent support 200 occurs through the coupling, for example via a tooth 218a in the interface configured to house at least one pin 240 of at least one actuator 230. For example, the actuator 230 is capable of imparting a high-frequency rotation ωₐ to a coupled pin 240 to the corresponding housing 218b made in the interface 218, which allows converting the rotary motion ωa into a linear translation at speed Vt. Varying the rotation speed ωa consequently varies the translation speed Vt and the relative reproduction of the image on the set of light sources LS1, LS2, LS3, LS4 (for example, multicolor LED strips) of the device 20, facilitating the obtaining of the holographic effect of visualizing tridimensional images provided via the conventional fan displays 10.

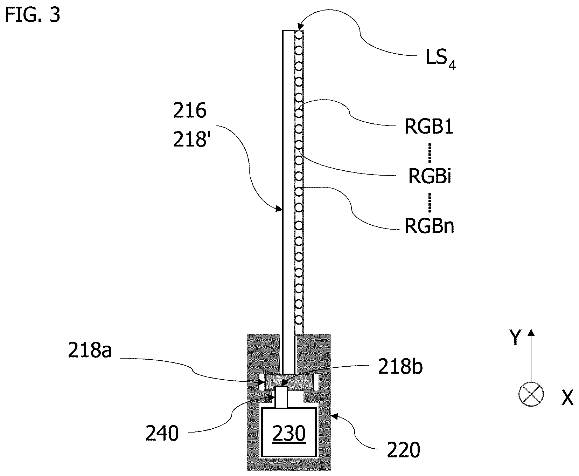

Figure 3 shows a cross section along axis III-III of the device 20 exemplified in Figure 2.

As exemplified in Figure 3, each light source (for example, the strip LS₄ corresponding to the "tooth" 216 of the comb structure or integrated into a resin body 218') comprises, in a manner per se known, a plurality of LED light sources configured to emit light in a variety of frequencies (for example, light sources RGB₁,...,RGBi,... ,RGBn each configured to emit light of different colors as a combination of red, green, and blue light, in a manner per se known).

As exemplified in Figure 3, the interface 218 comprises at least one connection element 218a that couples all the elements 210, 212, 214, 216 of the "comb". For example, an upper surface of the connection element 218a serves as a base for the support elements 210, 212, 214, 216 while a lower surface of the interface houses a recess 218b configured to couple at least one pin 240 of one or more actuators 230 with the overlying structure so as to allow its translation.

Alternatively, in the case where a single resin body 218' is used as the support 200 for the light sources, the connection element 218a becomes optional or can be integrated into the resin body 218', for example as a protrusion at the bottom to more easily insert the pin 240 of the actuator 230.

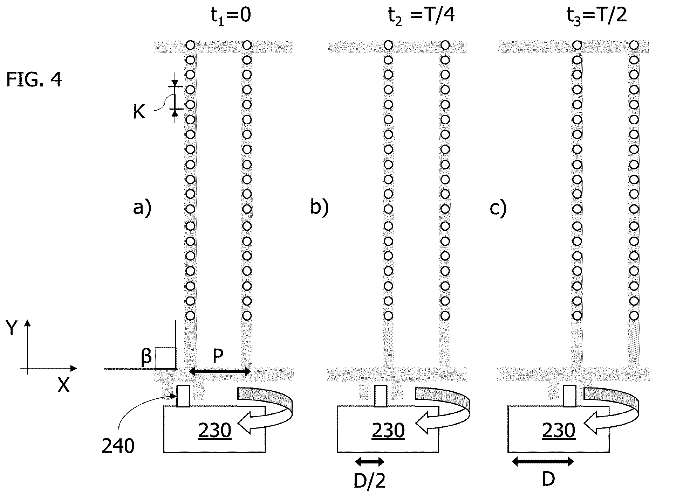

Figure 4 comprises portions a), b) and c) in each of which a different instant of time t1, t2, t3 during the movement of the structure 218 of the display 20 is exemplified.

As exemplified in portion a) of Figure 4, the diodes present in the light strips LS₁, LS₂, LS₃, LS₄ coupled to the at least one support element 200 (for example, the array of support elements 210, 212, 214, 216) define a planar grid of light sources with grid parameters:
pitch or distance between light sources K along a first axis (e.g., Cartesian axis Y),
pitch or distance between support elements P along a second axis (e.g., Cartesian axis X), and
pitch or angle β between the axis of the longitudinal formations of the light sources and/or that of the support elements and the transverse axis (e.g., β=90° between axis X and axis Y).

As exemplified in portion a) of Figure 4, at an initial instant t1 the pin 240 is in an initial position that can be identified as a "zero" of its stroke, whose maximum extension is equal to a diameter D of the circumference it travels in one rotation period of the actuator 230.

As exemplified in portion b) of Figure 4, at a subsequent instant t2 the pin 240 is in an intermediate position that can be identified with any intermediate point of the diameter D of its stroke.

As exemplified in portion b) of Figure 4, at a subsequent instant t2 the pin 240 is in an intermediate position that can be identified with any intermediate point of the diameter D of its stroke (for example, half stroke D/2 if the second instant t2 is at a quarter period T/4 of time from the first instant T1).

As exemplified in portion c) of Figure 4, at a further subsequent instant t3 corresponding to half period, the pin 240 is in a final position of the diameter D of its stroke.

In the scenario exemplified in Figure 4, the Inventors have observed that it can be advantageous to make the pin stroke D equal to the pitch P of the grid of light sources LS₁, LS₂, LS₃, LS₄ coupled to the at least one support 200 to facilitate the visualization of tridimensional images.

To facilitate the visualization of digital images, an aspect ratio ("aspect ratio") equal to that used in conventional displays for video visualization, such as 4:3 or 16:9, can be used between a longitudinal height and a transverse length of the rectangular grid 218 comprising the plurality of supports with their respective light sources.

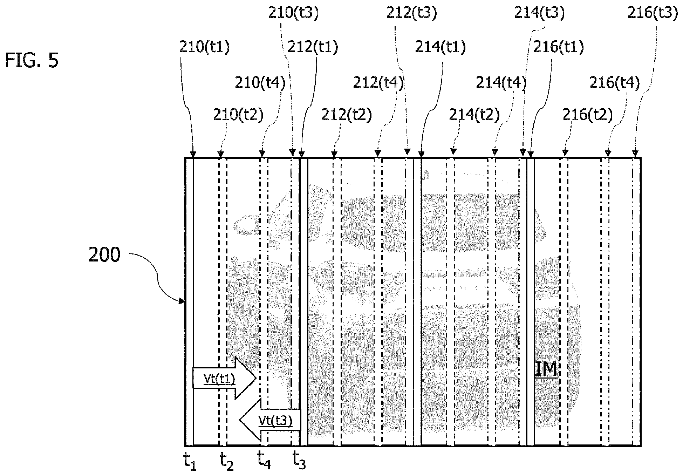

Figure 5 is an exemplary diagram of principles underlying the visualization of tridimensional images on the display 20 exemplified in figures 3 to 4.

As exemplified in Figure 5, between an initial instant t₁ and a half period t₄=T/2 of the rotation of the actuator 230 each support element 210, 212, 214, 216 of respective light sources LS₁, LS₂, LS₃, LS₄ is translated and travels a multiple distance (for example, four times) of the stroke D of the pin 240 (equal to the distance P between two adjacent support elements, for example).

As exemplified in Figure 5, the direction of the translation velocity changes between the initial instant t₁, wherein the displacement occurs with positive velocity Vt(t1), and a subsequent instant t3, wherein the displacement occurs with velocity Vt(t3) directed in the opposite direction to the initial velocity Vt(t1).

As exemplified in Figure 5, it is virtually possible to use a variable velocity to move the light sources coupled to their respective support elements 210, 212, 214, 216 at different instants of time, just as it is also possible to use a uniform rotary motion of the actuator 230.

As exemplified in Figure 3 and in Figure 5, in the case of uniform motion of the actuator 230, the positions of the support elements 210(t2), 212(t2), 214(t2), 216(t2) of respective light strips LS₁, LS₂, LS₃, LS₄ at the second instant of time t2 coincide with those of the elements 210(t4), 212(t4), 214(t4), 216(t4) at the instant of time t₄ in the case where the distance between successive instants of time is the same and equal to a quarter period (i.e., t₄-t₃=t₃-t₂=t₂-t₁=T/4).

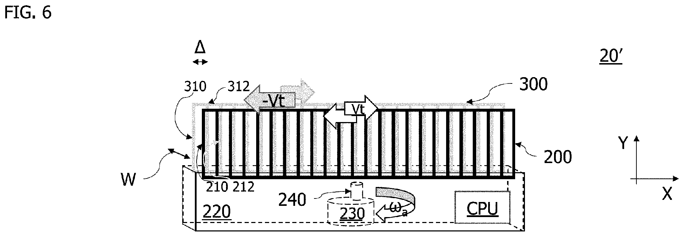

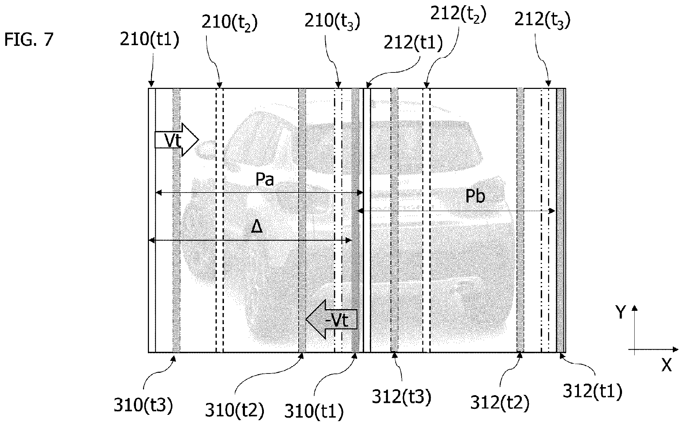

As exemplified in Figures 6 and 7, in an alternative version a device 20' comprises the use of a plurality of supports 200, 300 (for example each comprising a resin body or other transparent material or respective arrays of movable support elements arranged "comb-like" and separated by a space that allows seeing through) coupled to respective light sources LS_{1A},...,LSₙₐ; LS_{1B},...,LS_{nB} (for example LED strips equipped with multicolor diodes to produce light in the frequencies of the colors red, green and blue according to the RGB color system or also other color systems, in a manner per se known).

In the case exemplified in Figure 6, the set of light sources defines a spatial grid that repeats periodically along three Cartesian axes X, Y, Z, wherein a depth W between two adjacent supports represents a further parameter of the spatial grid.

As exemplified in Figure 6, two supports 200, 300 (and their respective LED strips coupled to them) can be coupled to a same actuator 240 and moved along the same axis but starting from different initial positions, for example with an end of the second array 300 starting from an initial position offset by an interval Δ relative to the same end of the first support 200.

Alternatively or in addition, in one or more embodiments the second array of light strips (for example, embedded in a respective resin body 318' or coupled to respective support elements 310, 312) can be configured to be moved (via one or more actuators 240) in a direction (and relative velocity -Vt) opposite to the direction (and relative velocity Vt) of movement of the first array of light strips (for example, embedded in a respective resin body 218' or coupled to respective supports 210, 212). Consequently, the movement between the supports of the plurality of supports 200, 300 can be both of the in-phase type and of the counter-phase type between them, for example.

The Inventors have observed that such counter-phase movement can facilitate the visualization of moving images since the movement frequency of the actuator 240 can be reduced.

It is noted that the description of the use of a rotary actuator 230 carried out so far is for purely exemplary and non-limiting purposes. one or more embodiments can use virtually any type of actuator 240, also a linear piezoelectric actuator coupled to guides to slide the supports in the plurality of supports 200, 300 along rails, for example.

The use of a rotary actuator 230 equipped with a respective pin 240 to transform the rotary movement into a translative movement is convenient because this facilitates the use of a CPU programmed to move conventional fan displays and their LEDs also to drive a device 20, 20' according to the present description, thereby reducing the complexity of programming the device.

As exemplified in Figure 7, at an initial instant of time t₁:
a first element 210 of a first array of light elements of a first support 200 is in an initial position 210(t1) as well as a second element 212 of the first array of light elements of the first support 200 which is in a respective initial position 212(t1), spaced by a pitch Pa from the first element 210;
a third element 310 of a second array of light elements of a second support 300 is in an initial position 310(t1) as well as a fourth element 312(t1) of the second array of light elements of the second support 300 is in a respective initial position 312(t1), spaced by a pitch Pb from the third element 310, where the second pitch Pb can be approximately equal to the first pitch Pa; furthermore the initial position of the third 310(t1) and of the fourth 312(t1) element is spaced by an offset Δ relative to the initial positions 210(t1), 212(t1) of the elements of the first array of light elements of the first support 200.

As exemplified in Figure 7, between the initial instant t₁ and the subsequent instant t₂:
the first 210 and second 212 element of the first array of light sources of the first support 200 translate with velocity Vt and according to a first direction of the axis (for example, according to the direction of the arrow identifying the Cartesian axis X), reaching respective second positions 210(t2), 212(t2);
the third 310 and fourth 312 element of the second array of light sources of the second support 200 translate with velocity -Vt and according to a second direction of the axis opposite to the first direction (for example, according to the direction opposite to that of the arrow identifying the Cartesian axis X), reaching respective second positions 310(t2), 312(t2).

As exemplified in Figure 7, between the second instant t₂ and the subsequent instant t₃:
the first 210 and second 212 element of the first array of light sources of the first support 200 are translated again with velocity Vt along the same first axis, reaching respective third positions 210(t3), 212(t3);
the third 310 and fourth 312 element of the second array of light sources of the second support 300 are translated again with velocity along the same axis but with opposite direction -Vt, reaching respective third positions 310(t3), 312(t3).

Since the second 310(t2), 312(t2) and third 310(t3), 312(t3) positions of the second array 318 are located within the area delimited by the elements 210, 212 of the first array 218 (and vice versa), it is understood that the solution that adopts multiple supports in parallel 200, 300 can move the light sources at reduced frequencies compared to the solution with only one support 200, since the multiplicity of arrays facilitates the coverage of the same visualization area with a translation frequency (and therefore corresponding rotation ω of the motor of the actuator 230).

A display device for visualizing images with holographic effect as exemplified in figures 2 to 7 comprises:
a set of support elements comprising a plurality of light sources comprising light sources distributed in formations of linear arrays of light sources, wherein:
the light sources in the plurality of light sources are configured to emit light of a plurality of colors;
the linear arrays of light sources in each support element of the set of support elements are spaced from each other by at least a first pitch (e.g., P, Pa or Pb) along a transverse axis (e.g., X);
the light sources in the plurality of light sources are spaced from each other along a longitudinal axis (e.g., Y) with a second pitch (e.g., K) smaller than the at least one first pitch.

As exemplified in figures 2 to 7, the device further comprises:
a set of actuators coupled to respective support elements in the set of support elements, each actuator in the set of actuators being configured to provide at least one translative movement along the transverse axis (e.g., X) to the respective support element, and
a control unit (CPU) coupled to the set of actuators and to the set of light sources coupled to the set of support elements to apply the at least one translative movement and to drive the light sources, wherein the control unit is configured to receive a set of signals indicative of digital images that evolve over time and to drive the light sources in each set of light sources in each support element to reproduce (i.e., display) the digital images that evolve over time together, preferably in a synchronized manner, with the application of the translative movement via the set of actuators.

For example, the set of light sources comprises strips of light sources of the Light-Emitting Diode, LED, type, configured to emit light of a plurality of colors.

As exemplified in figures 2 to 7:
the set of support elements comprises a transparent resin body in which the plurality of light sources comprising light sources in formations of linear arrays of light sources is integrated, and/or
the set of support elements comprises a semi-transparent set of arrays of linear support elements, each array in the set of arrays of linear support elements comprising a plurality of linear support elements, each linear support element in each array of linear support elements coupled to a respective linear array of light sources, wherein the linear support elements are spaced from each other along a transverse axis (for example, X) with at least a first pitch (for example, P) so as to allow light to pass through the spaces between adjacent elements (so as to allow light to pass through the spaces between adjacent elements).

As exemplified in figures 2 to 7, the device comprises a plurality of support elements each having an initial position (for example, 210(t1), 310(t1)) wherein a respective end presents an offset (for example, Δ) along a transverse axis (for example, X) relative to the same end of at least one other support element, wherein each actuator in the set of actuators (230, 240) is configured to provide a translative movement in phase (i.e., according to a same direction along the transverse axis, for example X, to the linear arrays of light elements in the formation of arrays of linear support elements), or in counter-phase (i.e., according to opposite directions along the transverse axis, for example X, to the linear arrays of light sources in the formation of arrays of linear support elements).

As exemplified in figures 2 to 7:
the light sources of a first support element of the set of support elements in a first set of formations of linear arrays of light sources are spaced from each other along a transverse axis (for example, X) with a first pitch (for example, Pa), and
the light sources of a second support element (300) of the set of support elements in a second set of formations of linear arrays of light sources are spaced from each other along a transverse axis (for example, X) with a second pitch (for example, Pb) different from the first pitch.

As exemplified in figures 2 to 7, the first transverse axis (for example, X) and the second longitudinal axis (for example, Y) form between them an angle (for example, β), preferably equal to 90°.

As exemplified in figures 2 to 7, the device comprises:
at least one rotary actuator coupled to at least one support element in the set of support elements via a movable pin that engages a respective housing made in at least one portion of the at least one support element in the set of support elements, wherein:
the rotary actuator is configured to rotate with an angular velocity (for example, ωₐ) along a longitudinal axis of rotation (for example, Y) which, via a harmonic motion of the pin of the actuator, corresponds to a translation velocity (for example, Vt) along the transverse axis (for example, X) of the at least one support element in the set of support elements,
the control unit (CPU) is configured to receive a set of signals indicative of digital images that evolve over time and to drive the light sources (for example, in the form of strips) in the plurality of light sources (for example, LEDs) of the at least one support element in the set of support elements to reproduce the digital images that evolve over time together with the application of the translation movement via the harmonic motion of the pin coupled to the rotating actuator.

As exemplified in figures 2 to 7, the mobile pin travels a circumference of diameter D in one rotation period of the rotating actuator (230), wherein said diameter D is equal to the first pitch that distances, along said transverse axis (for example, X), the (formations of) linear arrays of light sources in each support element of the set of support elements.

As exemplified herein, a control method of a display device as exemplified in figures 2 to 7 comprises:
receiving a set of signals indicative of digital images that evolve over time, preferably signals indicative of digital images detected by sensors equipped on board a vehicle, and
driving the light sources in a plurality of light sources distributed in formations of linear arrays of light sources to reproduce the digital images that evolve over time together, preferably in a synchronized manner, with the application of a translation movement via a set of actuators.

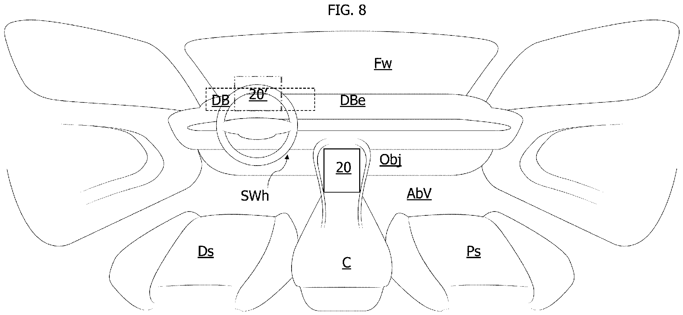

Figure 8 is exemplary of at least a front part (for example delimited by a front glass FW of the vehicle) of the internal volume AbV of a vehicle V, such as an automobile, wherein a portion of the volume (for example, the left part) is dedicated to housing a driver station Ds and an adjacent portion (for example, the right part) intended to house a passenger station Ps. For example, the driver station Ds is characterized by the presence of the steering wheel Swh in front of the seat.

As exemplified in Figure 8, each portion Ds, Ps of the internal volume can comprise one or more seats and one or more portions of an instrument panel DBe that comprises instruments and indicators, such as a speedometer, a tachometer and a temperature display. Modern instrument panels can also have digital screens and integrated infotainment systems.

As exemplified in Figure 8, between the passenger station Ps and the driver station Ds are present:
a central console C comprising, for example, an infotainment system, which includes navigation, Bluetooth connectivity, and controls for the air conditioning; it can also have USB ports and charging sockets.
an intermediate structure whose capacity varies based on the model.

As exemplified in Figure 8, the passenger compartment AbV of the vehicle is equipped with at least one display device (in short, display) for tridimensional images 20, 20' according to the present description.

For example:
the instrument panel DB situated behind the steering wheel SWh can comprise a display 20, 20' which can also be or alternatively be mounted as a retractable heads-up display from the top part of the instrument panel DB; and/or
the entire front horizontal part of the passenger compartment DBe can be used to display tridimensional images with a device 20, 20' that extends for the entire length thereof;
alternatively or in addition, the intermediate structure Obj can be transparent and can be integrated with a screen of the type 20, 20'.

A vehicle as exemplified in figure 8 comprises an internal passenger compartment volume and comprising at least one vehicle control device configured to be operated by a driver of the vehicle, wherein the internal passenger compartment volume of the vehicle comprises:
at least one display device as exemplified in figures 2 to 7 positioned in an instrument panel area (DB) situated behind the vehicle control device, and/or
at least one display device as exemplified in figures 2 to 7 as a retractable heads-up display in a raised position relative to the vehicle control device, and/or
at least one display device as exemplified in figures 2 to 7 positioned in an extended instrument panel area that occupies the front part of the passenger compartment situated below a front glass; and/or
at least one display device as exemplified in figures 2 to 7 positioned in an intermediate portion (for example, central interposed between the seats) in the passenger compartment.

As exemplified in figure 8, the vehicle comprises a transparent barrier placed between the position of the driver of the vehicle and the display device as exemplified in figures 2 to 7, wherein the transparent barrier is that of a head-up display and the device is positioned behind it.

It remains understood, however, that the various implementation options identified and exemplified in the figures accompanying this description are not necessarily to be understood as having to be adopted in the same combinations exemplified in the figures. one or more embodiments can therefore adopt such (albeit non-optional) options individually and/or in different combinations with respect to the combinations exemplified in the accompanying figures.

Without prejudice to the underlying principles, the details and forms of embodiment can vary, even significantly, with respect to what has been described previously by way of mere examples, without departing from the scope of protection. The scope of protection is defined by the annexed claims.

## Claims

1. A display device (20; 20') to display images with a holographic effect, the device (20; 20') comprising:
a set of support elements (200; 300) comprising a plurality of light sources (LS1, LS2, LS3, LS4) comprising light sources distributed in linear array formations of light sources(210, 212, 214, 216; 210, 212, 310, 312),
wherein:
the light sources (RGB1,..., RGBi,..., RGBn) in the plurality of light sources (LS1, LS2, LS3, LS4) are configured to emit light of a plurality of colors;
the linear array formations of light sources (210, 212, 214, 216; 210, 212, 310, 312) in each support element of the set of support elements (200; 300) are spaced apart by at least one pitch (P; Pa, Pb) along a transverse axis (X);
the light sources (RGB1,..., RGBi,..., RGBn) in the plurality of light sources (LS1, LS2, LS3, LS4) are spaced apart along a longitudinal axis (Y) by a second pitch (K) lower than the first pitch (P; Pa, Pb);
wherein the device (20; 20') further comprises:
a set of actuators (230, 240) coupled (218b) to respective support elements in the set of support elements (200; 300), each actuator in the set of actuators (230, 240) being configured to provide at least one displacement movement along the transverse axis (X) to the respective support element in the set of support elements (200; 300):
a control unit (CPU) coupled to the set of actuators (230, 240) and to the set of light sources (LS1, LS2, LS3, LS4) coupled to the set of support elements (200; 300) to apply at least one displacement movement and to drive the light sources (RGB1,..., RGBi,..., RGBn) in each set of light sources (LS1, LS2, LS3, LS4) in each support element (200; 300) to display the digital images that evolve over time together, preferably in a synchronized manner, with the application of the translation movement through the set of actuators (240, 230).

2. The device (20; 20') according to claim 1, wherein the set of light sources (LS₁, LS₂, LS₃, LS₄) compriseses stripes of light sources (RGB1,..., RGBi,..., RGBn) of the type Light-Emitting Diode, LED, configured to emit light of a plurality of colors.

3. The device (20; 20') according to any one of the preceding claims, wherein:
the set of support elements (200; 300) comprises a transparent resin body (218') in which the plurality of light sources (LS1, LS2, LS3, LS4) comprising light sources in the linear array formations of light sources (210, 212, 214, 216; 210, 212, 310, 312) is integrated, and / or
the set of support elements (200; 300) comprises a semi-transparent set of supporting linear element arrays (218), each array in the set of supporting linear element arrays (218) comprising a plurality of supporting linear elements (210, 212, 214, 216; 210, 212, 310, 312), each supporting linear element (216) coupled to a respective set of light sources (LS₄) comprising light sources (RGB1,..., RGBi,..., RGBn) configured to emit light of a plurality of colors, in which the supporting linear elements (210, 212, 214, 216; 210, 212, 310, 312) are spaced along a transverse axis (X) by at least one first pitch (P; Pa, Pb) so that light crosses the spaces between adjacent elements.

4. The device (20; 20') according to any of the preceding claims, comprising:
a plurality of support elements (200, 300) each having a starting position (210(t1), 310(t1)) in which a respective extremity has an offset (Δ) in a transverse axis (X) with respect to the same extremity of at least one other support element (300);
wherein each actuator in the set of actuators (230, 240) is configured to provide a displacement movement:
in phase, that is in a same direction along the transverse axis (X) of the linear arrays of light sources in the linear array formations of light sources (210, 212; 310, 312), or
in counterphase, that is in opposite directions along the transverse axis (X) of the linear arrays of light sources in the linear array formations of light sources (210, 212; 310, 312).

5. The device (20; 20') according to claim 4, wherein:
the light sources (LS₁, LS₂, LS₃, LS₄) of a first support element (200) of the set of support elements (200; 300) in a first linear array formation of linear array formations of light sources (210, 212) are spaced apart therebetween along a transverse axis (X) by a first pitch (Pa), and
the light sources (LS₁, LS₂, LS₃, LS₄) of a first support element (200) of the set of support elements (200; 300) in a second linear array formation of linear array formations of light sources (310, 312) are spaced apart therebetween along the transverse axis (X) by a second pitch (Pb) different from the first pitch (Pa).

6. The device (20; 20') according to any one of the previous claims, wherein said first trasversal axis (X) and said second longitudinal axis (Y) form an angle therebetween (β), preferably an angle equal to 90°.

7. The device (20; 20') according to any one of the previous claims, comprising:
at least one rotating actuator (230) coupled (218b) to at least one support element in the set of support elements (200, 300) via a mobile pivot (240) that engages a respective housing (218b) made in at least one portion (218, 218') of the at least one support element in the set of support elements (200, 300),
wherein:
the rotating actuator (230) is configured to rotate at an angular velocity (ωₐ) along a longitudinal rotation axis (Y) that, via a harmonic motion of the mobile pivot (240), matches a displacement velocity (Vt) along the transverse axis (X) of the at least one support element in the set of support elements (200, 300), and
the control unit (CPU) is configured to receive a set of signals indicative of digital images that evolve over time and to drive the light sources (RGB1,..., RGBi,..., RGBn) in the plurality of light sources (LS₁, LS₂, LS₃, LS₄) of the at least one support element in the set of support elements (200, 300) to display the digital images that evolve over time together with, preferably in a manner synchronized with, applying the displacement movement via the harmonic motion of the pivot (240) coupled to the rotating actuator (230).

8. The device (20; 20') according to claim 7, wherein the mobile pivot (240) travels a circumference of diameter D during a rotation period of the rotating actuator (230), wherein said diameter D is equal to said first pitch (P; Pa, Pb) that spaces aparts along said transverse axis (X) the linear arrays of light sources (210, 212, 214, 216; 210, 212, 310, 312) in each support element of the set of support elements (200; 300).

9. A control method of a display device (20; 20') according to any one of the previous claims, the method comprising:
receiving a set of signals indicative of digital images that evolve over time, preferably signals indicative of digital images that are detected by sensors equipped on-board a vehicle, and
driving the light sources (RGB1,..., RGBi,..., RGBn) in a plurality of light sources (LS1, LS2, LS3, LS4) distributed in linear array formations of light sources (210, 212, 214, 216; 210, 212, 310, 312) to display the digital images that evolve over time together with, preferably in a manner sincronized with, applying a displacement movement via a set of actuator (240, 230).

10. A vehicle comprising an interior passenger compartment volume (AbV) comprising at least one vehicle control device (SWh) configured to be operated by a vehicle driver, wherein the interior passenger compartment volume (AbV) of the vehicle includes:
at least one device (20; 20') according to any one of claims 1 to 8 located in a dashboard area (DB) located behind the vehicle control device (SWh), and/or
at least one device (20; 20') according to any one of claims 1 to 8 mounted as pull-out head-up display in a in an elevated position with respect to the vehicle control device (SWh), and/or
at least one device (20; 20') according to any one of claims 1 to 8 located in an extended dashboard area (DBe) that occupies the front of the passenger compartment located below a front glass (Fw); and/or
at least one device (20; 20') according to any one of claims 1 to 8 located in an intermediate portion in the passenger compartment (Obj).

11. The vehicle according to claim 10, comprising a transparent barrier placed intermediate the position of the vehicle driver and the device (20; 20') according to any of the above claims, wherein the transparent barrier is that of a heads-up display and the device (20, 20') is located behind it.
